# EUROPÄISCHE PATENTSCHRIFT

(11) **EP 2 296 015 B1**
(45) Veröffentlichungstag und Bekanntmachung des Hinweises auf die Patenterteilung: **27.02.2019**
(21) Anmeldenummer: 10008983.8
(22) Anmeldetag: 28.08.2010
(51) Int. Cl.: G01V 5/00, G01T 1/167

(54) **Verfahren zur Erfassung einer Kontamination an einem bewegten Objekt**
Method for recording contamination of a moved object
Procédé d'établissement d'une contamination sur un objet mobile

(30) Priorität: 15.09.2009 DE 102009042056
(43) Veröffentlichungstag der Anmeldung: 16.03.2011
(73) Patentinhaber: Mirion Technologies(RADOS) GmbH, 22761 Hamburg (DE)
(72) Erfinder: Van Bree, Daan, 7944 RT Meppel (NL); Kölln, Ingo, 22609 Hamburg (DE)
(74) Vertreter: Hauck Patentanwaltspartnerschaft mbB

(56) Entgegenhaltungen:
- US-A1- 2005 029 460
- US-A1- 2008 157 986

## Beschreibung

Die vorliegende Erfindung betrifft ein Verfahren zur Erfassung einer Kontamination an einem bewegten Objekt, das sich in einer Längsrichtung an mehreren Detektoren vorbeibewegt.
Es ist üblich, an Ein- und Ausgängen von kerntechnischen Anlagen, aber auch an Grenzübergängen, Flughäfen oder allgemein an Ein- und Ausgängen von Gebäuden oder Gebieten Kontrollen auf den Transport von radioaktiven Quellen durchzuführen. Die durchgeführten Kontrollen dienen einerseits zum Schutz der Personen und können andererseits auch den illegalen Transport von radioaktivem Material aufdecken. Nachfolgend werden diese beiden Aspekte zur Erfassung einer Kontamination zusammengefasst, wenn von zu erfassenden oder zu prüfenden Objekten gesprochen wird. Typischerweise werden die zu prüfenden Objekte, dies können Personen, Fracht und/oder Fahrzeuge sein, durch einen sogenannten Portalmonitor geleitet, bei dem seitlich zur Bewegungsrichtung des Objekts Detektoren für Gammastrahlung und/oder für Gamma- und Neutronenstrahlung vorgesehen sind.
Der eingesetzte Portalmonitor kann bei einem stetigen Fluss von zu prüfenden Objekten zu einem Nadelöhr werden, an dem sich ein Rückstau bildet. Bei der Kontrolle von Personen an den Ein- und Ausgängen treten dann Wartezeiten auf. Auch bei Containerkontrollen beispielsweise im Hafen kann es durch die Wartezeit zu einer Verlangsamung der abgefertigten Container kommen. Eine mögliche Ursache von solchen Wartezeiten besteht in Fehlalarmen, bei denen der Portalmonitor fälschlicherweise eine Kontamination anzeigt.

Aus US 2008/157986 A1 ist ein Portalmonitor bekannt, wobei aus mindestens zwei benachbarten Detektoren ein Differenzsignal der Messergebnisse gebildet wird.

Aus US 2005/029460 A1 ist eine Anordnung von (M+ 1)-Strahlungsdetektoren zur Erfassung von M benachbarten Verkehrswegen bekannt. Dabei ist jeder Strahlungsdetektor mit seinen beiden benachbarten Strahlungsdetektoren gekoppelt, um deren Signale mit auszuwerten.

Der Erfindung liegt die Aufgabe zugrunde, ein Verfahren zur Erfassung einer Kontamination an einem bewegten Objekt bereitzustellen, die mit möglichst einfachen Mitteln Fehlalarme vermeiden und eine genaue Messung erlauben.

Erfindungsgemäß wird die Aufgabe durch ein Verfahren mit den Merkmalen aus Anspruch 1 gelöst.

Bei dem erfindungsgemäßen Verfahren wird die Kontamination von einem bewegten Objekt, das sich in einer Längsrichtung an mehreren Detektoren vorbeibewegt, erfasst. Erfindungsgemäß wird während der Bewegung des Objekts an den in Längsrichtung hintereinander angeordneten Detektoren vorbei von jedem Detektor mehrfach eine Zählrate erfasst. Die erfassten Zählraten werden vor einer Auswertung, ob eine Kontamination vorliegt, einer Plausibilitätsprüfung unterzogen. Die Auswertung der erfassten Zählraten kann in an sich bekannter Weise erfolgen. Bei der Plausibilitätsprüfung werden von den Detektoren erfasste Zählraten mit einer Klasse von vorbestimmten Referenzmustern für die Zählraten verglichen. Durch die mehrfache Erfassung der Zählrate an den Detektoren entsteht ein zeitlicher Verlauf der Zählrate an jedem der Detektoren. Dieser zeitliche Verlauf der Zählraten wird als Muster verstanden und kann mit vorbestimmten Referenzmustern verglichen werden. Hierbei können Algorithmen zur Mustererkennung eingesetzt werden, die eine Übereinstimmung in den Mustern vergleichen, nicht aber von den konkreten Werten der Zählraten abhängig sind. Durch den Vergleich mit den Referenzmustern kann sichergestellt werden, dass nur plausible Zählraten einer Auswertung im Hinblick auf eine Strahlenbelastung zugeführt werden. Wenn bei der Plausibilitätsprüfung dagegen erkannt wird, dass das erfasste Muster nicht zu einer Klasse von vorbestimmten Referenzmustern gehört, kann ein Signal generiert werden, das einen Fehler in den erfassten Zählraten anliegt. Dies macht es notwendig, den Messvorgang für das Objekt zu wiederholen. Ergibt die Plausibilitätsprüfung, dass die erfassten Zählraten plausibel sind, so können diese ausgewertet werden, um ein zuverlässiges Messergebnis zu erzielen. Mit Hilfe der Plausibilitätsprüfung werden Fehlalarme vermieden, da nur plausible Messdaten ausgewertet werden. Im Übrigen werden auch die Ergebnisse bei der Auswertung der Zählraten verbessert, da nur plausible Zählraten ausgewertet werden. Auch kann vorgesehen sein, spezifische Zählraten, die als plausibel erkannt wurden, einer speziellen Auswertung zuzuführen.

In dem erfindungsgemäßen Verfahren weist die Klasse von Referenzmustern die zeitliche Reihenfolge auf, in denen in den Detektoren Maxima in den Zählraten aufgetreten sind. Beispielsweise kann Referenzmuster als zeitliche Reihenfolge die Detektoren 1, 2, 3, 4... enthalten, wobei dann die Aussage des Referenzmusters ist, dass ein Maximum in den Zählraten zeitlich aufeinanderfolgend an den Detektoren 1, 2, 3,4 ... aufgetreten ist. Bei dieser Weiterentwicklung des Verfahrens wird zur Plausibilitätsprüfung aus den erfassten Zählraten die zeitliche Reihenfolge der Detektoren ermittelt, in denen Maxima in den Zählraten aufgetreten sind. Ein Fehler bei der Plausibilitätsprüfung wird dann erkannt, wenn die aus den erfassten Zählraten ermittelte zeitliche Reihenfolge der Detektoren nicht in der Klasse der Referenzmuster enthalten ist. Durch den Vergleich der Klasse vom Referenzmustern können somit Fälle ausgeschlossen werden, in denen beispielsweise ein weiter hinten liegender Detektor bereits ein Maximum anzeigt, das eigentlich erst später auftreten dürfte, wenn das Objekt diesen Detektor erreicht hat. Die Plausibilitätsprüfung ergibt dann, dass nicht plausible Zählraten erfasst wurden und generiert ein entsprechendes Warnsignal.

Erfindungsgemäß wird auch der zeitliche Verlauf der erfassten Zählraten an den einzelnen Detektoren über eine Mustererkennung mit dem zeitlichen Verlauf von Referenzmustern verglichen. Bei dem Einsatz an Portalmonitoren, bei denen sich ein Objekt mit oder ohne Strahlungsquelle in Längsrichtung an den Detektoren vorbeibewegt, ergibt sich bei Vorliegen von radioaktiver Strahlung ein charakteristischer zeitlicher Verlauf der Zählraten. Wenn der erfasste zeitliche Verlauf der Zählraten an einem der Detektoren von den Verläufen aus den Referenzmustern abweicht, wird erkannt, dass nicht plausible Zählraten vorliegen.

In einer bevorzugten Ausgestaltung umfasst die Klasse von Referenzmustern auch Zählraten, bei denen es in der Zählrate mindestens eines Detektors zu einer Absenkung der Zählrate unter einen mittleren Wert der Hintergrundzählrate kommt. Dieses Phänomen tritt auf, wenn sich ein massives Objekt an den Detektoren vorbeibewegt. Dann erfolgt eine Abschirmung der Hintergrundstrahlung, sodass die Hintergrundzählrate zunächst absinkt. Bevorzugt umfasst die Klasse der Referenzmuster auch Zählraten, bei denen es in der Zählrate eines Detektors zum Anstieg der Zählrate nach einem Absinken unter den mittleren Wert der Hintergrundzählrate kommt. Dies ist der Fall, wenn beispielsweise ein massives Objekt sich vor einem Detektor befindet, da dann zunächst Hintergrundstrahlung abgeschirmt und nachfolgend die erhöhte Nettozählrate durch die Strahlungsquelle erfasst wird.

In einer bevorzugten Weiterführung des erfindungsgemäßen Verfahrens wird, wenn die Zählraten der einzelnen Detektoren ein Absenken unter den Wert einer mittleren Hintergrundzählrate zeigt, zur Auswertung der Zählrate auf die Höhe des Anstiegs der Zählrate abgestellt. Hierbei kann anhand der Plausibilitätsprüfung sichergestellt werden, dass Zählraten mit diesem charakteristischen Verlauf vorliegen, so dass dies bei der Auswertung berücksichtigt werden kann.

Bevorzugte Ausführungsbeispiele werden nachfolgend anhand der Figuren erläutert.
Es zeigt:
- Fig. 1: in einer schematischen Ansicht einen Portalmonitor, der zur Durchführung des Verfahrens geeignet ist,
- Fig. 2: den zeitlichen Verlauf der drei Zählraten, die an einem Portalmonitor gemäß Fig. 1 bei Vorliegen einer Kontamination aufgezeichnet wurden,
- Fig. 3: den zeitlichen Verlauf von Zählraten, die als nicht plausibel erkannt werden,
- Fig. 4: den zeitlichen Verlauf von Zählraten bei einer Kontamination im Fuß-/Beinbereich einer Person und
- Fig. 5: den zeitlichen Verlauf der Zählraten bei einer kontaminierten Person.

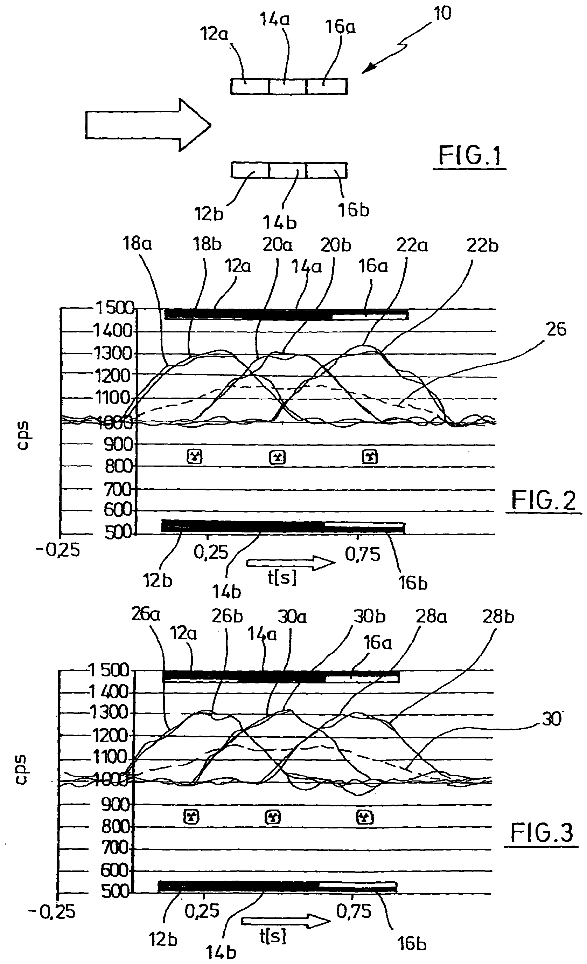

Fig. 1 zeigt einen Portalmonitor 10 in einer schematischen Ansicht, der drei Detektorpaare 12, 14 und 16 besitzt. Jedes Detektorpaar besteht aus einem Paar voneinander gegenüberliegend angeordneter Detektoren 12a, 12b; 14a, 14b; 16a, 16b. Bei den Detektoren kann es sich um Plastik-Szintillationsdetektoren und um ³He-Röhren bestückte Neutronendetektoren handeln. Grundsätzlich können auch andere für den Einsatz in Portalmonitoren geeignete Detektoren verwendet werden.

Fig. 2 zeigt einen zeitlichen Verlauf der Zählraten 18a, 18b, 20a, 20b, 22a, 22b, der sich bei Bewegung einer radioaktiven Probe durch den Portalmonitor ergibt. Hierbei entspricht die Zählrate 18a der Zählrate, die an dem Detektor 12a erfasst wird. Die an dem Detektor 12a auftretenden Zählraten werden während der Bewegung der Probe durch den Portalmonitor wiederholt erfasst, so dass sich zeitlich nacheinander unterschiedliche Zählraten ergeben. An der Zählrate 18a ist deutlich zu erkennen, dass die Zählrate an dem Detektor 12a und dem Eintritt der Probe in den Portalmonitor ansteigt, ein Maximum annimmt, wenn die Probe sich unmittelbar vor dem Detektor 12a befindet und wieder abnimmt, während die Probe sich weiter durch den Portalmonitor bewegt. Die Zählrate 18a zeigt beispielsweise, wenn die Probe sich in dem dritten Detektorpaar 16a, 16b befindet, wieder die Hintergrundstrahlung von ungefähr 1000 cps. Analog verhält sich die Zählrate 18b, die an dem Detektor 12b auftritt. Ebenfalls zu erkennen ist, dass die Zählraten 20a und 20b, die an den Detektoren 14a, 14b auftreten, später einsetzen und ebenfalls ein Maximum aufweisen, wenn sich die Probe unmittelbar vor den Detektoren 14a und 14 b befindet. Die Zählraten 22a und 22b werden an den Detektorenpaar 16a und 16b aufgezeichnet und besitzen ebenfalls ein Maximum, wenn sich die Probe unmittelbar vor den Detektoren 16a und 16b befindet.

Der in Fig. 2 dargestellte Verlauf der Zählraten ist plausibel, da die Detektoren 12a, 12b, 14a, 14b und 16a, 16b jeweils nacheinander auf die Probe ansprechen und jeweils ungefähr einen gleichen Verlauf zeigen. Die so gewonnenen Zählraten können dann einer Auswertung zugeführt werden.

In Fig. 2 ist ferner eine Summenzählrate dargestellt, die sich ergibt, wenn die Zählraten aller Detektoren gebildet werden. Es ist deutlich zu erkennen, dass die gemittelte Zählrate 24 deutlich niedriger verläuft. Dies liegt u. a. daran, dass wenn beispielsweise das Detektorenpaar 12a und 12b das Maximum in den Zählraten feststellt, das Detektorenpaar 16a und 16b lediglich eine Hintergrundzählrate misst, so dass eine Mittlung der Zählraten zwischen den Detektorenpaaren 12a, 12b und 16a, 16b zu der niedrigeren Zählrate 24 führen.

Fig. 3 zeigt beispielhaft den Verlauf von Zählraten, der nicht plausibel ist. In Fig. 3 stammen die Zählraten 26a, 26b von dem Detektorenpaar 12a, 12b, die Zählraten 30a, 30b von dem Detektorenpaar 16a, 16b und die Zählraten 28a, 28b von dem Detektorenpaar 14a, 14b. In Fig. 3 tritt das Maximum der Zählraten 30a, 30b vor das Maximum der Zählraten 28a, 28b auf. Dies bedeutet, dass sich die radioaktive Probe zuerst vor dem Detektorpaar 12a, 12b befindet und anschließend dem Detektorenpaar 16a, 16b und erst anschließend sich vor dem mittleren Detektorenpaar 14a, 14b befindet. Nimmt man an, dass die Probe sich durch den Portalmonitor bewegt, so liegen Werte vor, die nicht plausibel sind. In diesem Fall löst der Portalmonitor ein Signal aus, das anzeigt, dass nicht plausible Zählraten vorliegen. Dieses Signal kann dann Anlass sein, die Messung zu wiederholen oder dazu dienen, die Funktionsweise des Portalmonitors zu überprüfen. Auch ist es möglich, für das Objekt, bei dem eine solche Zählrate in falscher zeitlicher Reihenfolge auftritt, eine gesonderte und genauere Messung durchzuführen. Wichtig an dem Vergleich der einzelnen Zählraten ist, dass die Summenzählrate 30 hierbei einen durchaus ähnlichen Verlauf wie die Summenzählrate 24 besitzt. Ein herkömmlicher Portalmonitor würde also in dieser Situation keine Abweichung oder Anomalität feststellen und die mittlere Zählrate 30 auswerten, ohne die Besonderheit der falschen zeitlichen Reihenfolge zu prüfen.

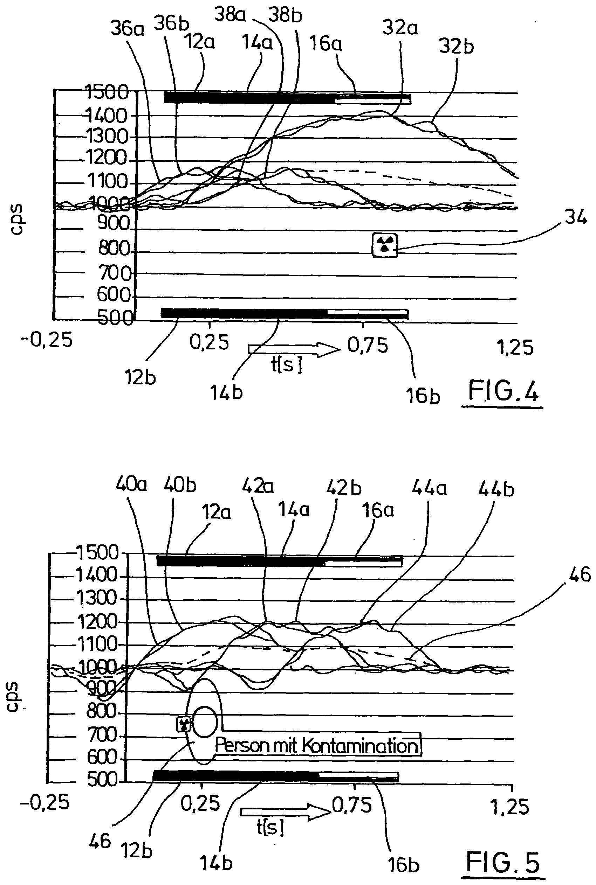

Fig. 4 zeigt einen weiteren Fall, in dem eine Besonderheit bei der Probe vorliegt. Eine Person, die eine radioaktive Kontamination im Fuß- oder Beinbereich besitzt, tritt in den Portalmonitor ein, wobei der kontaminierte Fuß- oder Beinbereich an den ersten beiden Detektorenpaaren 12a, 12b und 14a, 14b zügig vorbeibewegt wird und vor dem dritten Detektorenpaar 16a, 16b zum Stehen kommt. An dem dritten Detektorenpaar 16a, 16b tritt dann eine erhöhte Zählrate 32a, 32b auf. Die Auswertung dieser Zählraten ergibt, dass die Zählrate deutlich über der Hintergrundszählrate liegt und dass daher eine Kontamination vorliegt. Dies wird durch das Symbol 34 in Fig. 4 angedeutet. Gleichzeitig ist in Fig. 4 zu erkennen, dass die Zählraten 36a, 36b und 38a, 38b von den Detektorenpaaren 12a, 12b und 14a, 14b nicht ansteigen. Aufgrund der Bewegung des Beines und des Schwingens und des Eintretens der Person in den Portalmonitor wird die Probe zügig an die Detektoren 12a, 12b und 14a, 14b vorbeibewegt, so dass deren Zählraten nur schwach ansteigen. Bei dem erfindungsgemäßen Verfahren wird dieser Verlauf der Zählraten als plausibel erkannt und anhand der Zählraten 32a und 32b ausgewertet. Alternativ ist es auch möglich, dass ein Warnsignal generiert wird, um den Messvorgang zu wiederholen.

Fig. 5 zeigt den zeitlichen Verlauf der Zählraten 40a, 40b sowie der Zählraten 42a, 42b und 44a, 44b. Charakteristisch an diesen Zählraten ist, dass die Zählrate zunächst unter der Hintergrundzählrate abfällt. In dem dargestellten Beispiel fallen die Zählraten beispielsweise auf den Wert 900 cps ab, während die mittlere Zählrate sonst bei ungefähr 1000 cps liegt. Deutlich zu erkennen ist beispielsweise an den Zählraten 40a, 40b, dass die Zählrate zunächst abfällt und anschließend auf eine Zählrate von 1200 cps ansteigt. Dies kann beispielsweise auftreten, wenn eine Person 46 in den Portalmonitor eintritt und die Detektoren zunächst vor der Hintergrundstrahlung abschirmt. In diesem Fall sinken die Zählraten der Detektoren. Erst dann zeigt sich die Kontamination durch Ansteigen der Zählraten 40a, 40b. Ein solcher Verlauf der Zählraten 40a, 40b, 42a, 42b und 44a, 44b wird bei dem erfindungsgemäßen Verfahren als plausibel erkannt. Gleichzeitig kann sichergestellt werden, dass diese Zählraten nicht nur auf ihr Maximum hin ausgewertet werden, sondern beispielsweise mit einer abgesenkten Hintergrundrate ausgewertet werden. Aus dem Verlauf der Summenzählrate 46 ist der Effekt der Abschirmung nicht erkennbar, so dass ein herkömmlicher Portalmonitor diese Daten auch bei einer nicht abgesenkten Zählrate auswerten würde.

## Patentansprüche

1. Verfahren zur Erfassung einer Kontamination an einem bewegten Objekt, das sich in einer Längsrichtung an mehreren Detektoren vorbeibewegt, wobei:
- von jedem der Detektoren (12a, 12b, 14a, 14b, 16a, 16b) während der Bewegung des Objekts an den Detektoren vorbei mehrfach eine Zählrate erfasst wird und **dadurch gekennzeichnet dass**
- vor einer Auswertung, ob eine Kontamination vorliegt, die erfassten Zählraten einer Plausibilitätsprüfung unterzogen werden, dahingehend, ob die erfassten Zählraten von den Detektoren zu einer Klasse von vorbestimmten Referenzmustern für die Zählraten gehört,
- wobei der zeitliche Verlauf der erfassten Zählraten an den einzelnen Detektoren über eine Mustererkennung mit dem zeitlichen Verlauf von Referenzmustern dahingehend verglichen wird, dass der Vergleich von einer Übereinstimmung in den Mustern und nicht von den konkreten Werten der Zählraten abhängig ist, und
- die Klasse von Referenzmustern die zeitliche Reihenfolge aufweist, in denen an den Detektoren Maxima in den Zählraten aufgetreten sind, und zur Plausibilitätsprüfung aus den erfassten Zählraten die zeitliche Reihenfolge der Detektoren ermittelt wird, an denen Maxima in den Zählraten aufgetreten sind, wobei ein Fehler dann erkannt wird, wenn aus den erfassten Zählraten eine ermittelte zeitliche Reihenfolge der Detektoren nicht in der Klasse der Referenzmuster enthalten ist.

2. Verfahren nach Anspruch 1, **dadurch gekennzeichnet, dass** die Klasse von Referenzmustern auch Zählraten umfasst, bei denen es in der Zählrate eines Detektors zu einer Absenkung der Zählrate unter einen mittleren Wert der Hintergrundzählrate kommt.

3. Verfahren nach Anspruch 2, **dadurch gekennzeichnet, dass** die Klasse der Referenzmuster auch Zählraten umfasst, bei denen es in der Zählrate eines Detektors zu einem Anstieg der Zählrate nach einem Absinken unter den mittleren Wert der Hintergrundzählrate kommt.

4. Verfahren nach Anspruch 3, **dadurch gekennzeichnet, dass**, wenn die erfassten Zählraten ein Absenken unter den Wert einer mittleren Hintergrundzählrate zeigen, zur Auswertung der Zählrate auf die Höhe des Anstiegs der Zählraten abgestellt wird.

## Claims

1. A method for recording contamination of a moved object which is moving in a longitudinal direction past a plurality of detectors,
wherein:
- a count rate is repeatedly recorded by each of the detectors (12a, 12b, 14a, 14b, 16a, 16b) during the movement of the object past the detectors and **characterized in that**
- prior to an evaluation of whether contamination exists, the recorded count rates are subjected to a plausibility check to establish whether the count rates recorded by the detectors belong to a class of pre-determined reference patterns for the count rates,
- wherein the temporal progression of the recorded count rates at the individual detectors is compared with the temporal progression of reference patterns by means of pattern recognition to the effect that the comparison is dependent on a correspondence in the patterns and not on the actual values of the count rates, and
- the class of reference patterns has the temporal sequence, in which maximum values in the count rates occurred at the detectors, and in order to check the plausibility, the temporal sequence of the detectors is established from the recorded count rates, at which detectors maximum values in the count rates occurred, wherein an error is then recognized if a temporal sequence of the detectors determined from the recorded count rates is not included in the class of the reference patterns.

2. The method according to Claim 1, **characterized in that** the class of reference patterns also comprises count rates, in which the count rate of a detector results in a drop in the count rate below an average value of the background count rate.

3. The method according to Claim 2, **characterized in that** the class of the reference patterns also comprises count rates, in which the count rate of a detector results in an increase in the count rate following a drop below the average value of the background count rate.

4. The method according to Claim 3, **characterized in that**, if the recorded count rates show a drop below the value of an average background count rate, an adjustment is made to the amount of the increase in the count rates in order to evaluate the count rate.

## Revendications

1. Procédé de mise en évidence d'une contamination sur un objet mobile, qui se déplace longitudinalement devant plusieurs détecteurs,
dans lequel :
- un taux de comptage est enregistré plusieurs fois par chacun des détecteurs (12a, 12b, 14a, 14b, 16a, 16b) durant le déplacement de l'objet devant les détecteurs et **caractérisé en ce que**
- les taux de comptage enregistrés sont soumis avant d'évaluer l'éventuelle présence d'une contamination à un contrôle de plausibilité pour savoir si les taux de comptage enregistrés par les détecteurs appartiennent à une classe de modèles de référence prédéfinis s'appliquant aux taux de comptage,
- dans lequel la variation temporelle des taux de comptage enregistrés sur les différents détecteurs est comparée moyennant une reconnaissance de formes à la variation temporelle de modèles de référence pour savoir si la comparaison est fonction d'une concordance dans les modèles et non des valeurs concrètes des taux de comptage, et
- la classe des modèles de référence présente l'ordre chronologique, dans lequel les valeurs maximales sont apparues dans les taux de comptage sur les détecteurs, et les taux de comptage enregistrés pour contrôler la plausibilité servent à établir l'ordre chronologique des détecteurs, sur lesquels les valeurs maximales sont apparues dans les taux de comptage, dans lequel une erreur peut être alors décelée si un ordre chronologique des détecteurs établi à partir des taux de comptage enregistrés ne figure pas dans la classe des modèles de référence.

2. Procédé selon la revendication 1, **caractérisé en ce que** la classe des modèles de référence comprend aussi des taux de comptage, parmi lesquels le taux de comptage d'un détecteur laisse apparaître une baisse du taux de comptage en dessous d'une valeur moyenne du taux de comptage de base.

3. Procédé selon la revendication 2, **caractérisé en ce que** la classe des modèles de référence comprend aussi des taux de comptage, parmi lesquels le taux de comptage d'un détecteur laisse apparaître une hausse du taux de comptage après une baisse en dessous de la valeur moyenne du taux de comptage de base.

4. Procédé selon la revendication 3, **caractérisé en ce qu'**il est arrêté pour évaluer le taux de comptage au niveau de la hausse des taux de comptage, si les taux de comptage enregistrés indiquent une baisse en dessous de la valeur d'un taux de comptage de base moyen.
